# EUROPEAN PATENT SPECIFICATION

(11) **EP 4 238 814 B1**
(45) Date of publication and mention of the grant of the patent: **02.07.2025**
(21) Application number: 23158378.2
(22) Date of filing: 24.02.2023
(51) Int. Cl.: B60L 53/36, B60L 53/80

(54) **WHEEL POSITIONING METHOD AND SYSTEM, MEDIUM, APPARATUS, AND BATTERY CHARGING AND SWAPPING STATION**
RADPOSITIONIERUNGSVERFAHREN UND -SYSTEM, MEDIUM, VORRICHTUNG UND BATTERIELADE- UND WECHSELSTATION
PROCÉDÉ ET SYSTÈME DE POSITIONNEMENT DE ROUE, SUPPORT, APPAREIL ET STATION DE CHARGE ET DE PERMUTATION DE BATTERIE

(30) Priority: 03.03.2022 CN 202210203771
(43) Date of publication of application: 06.09.2023
(73) Proprietor: Nio Technology (Anhui) Co., Ltd, Hefei City, Anhui 230601 (CN)
(72) Inventor: LUO, Jianglong, Shanghai (CN); ZHENG, Feifei, Shanghai (CN); WU, Qingyu, Shanghai (CN); WANG, Shuai, Shanghai (CN)
(74) Representative: Vossius & Partner Patentanwälte Rechtsanwälte mbB

(56) References cited:
- WO-A1-2019/114549
- CN-A- 110 386 022
- CN-A- 111 823 914
- CN-U- 213 594 124

## Description

### Technical Field

The disclosure relates to the field of battery charging and swapping technologies, and specifically, to a wheel positioning method and system, a medium, an apparatus, and a battery charging and swapping station.

### Background Art

At present, in a battery swapping process in a battery charging and swapping station, four wheels of a vehicle with a battery to be swapped are first positioned, to position a vehicle body in an accurate position for battery swapping. For example, published Chinese patent applications CN 110 386 022 A and CN 111 823 914 A each disclose a method for positioning the four wheels of a vehicle before swapping a battery. In addition, Chinese utility model patent CN 213 594 124 U and published PCT application WO 2019/114549 A1 each disclose a system for positioning the four wheels of a vehicle before swapping a battery. At present, a four-wheel positioning system implements positioning by using push rods at the left front, left rear, right front, and right rear positions to push tires to positions for battery swapping. According to such a positioning method, position values on servo motor encoders of the push rods for four wheels are obtained through field tests based on a wheel track of a current vehicle, and then the position values are used as working position parameters to determine whether the positioning is completed.

The method is basically applicable to conventional vehicles. However, for some vehicles that have wheel hubs modified, a wheel track after modification is relatively different from that before modification, which may lead to the following problems in a battery swapping process: a vehicle body is still skewed after positioning, which causes battery swapping failures, the push rods clamp too tightly, which leads to an alarm about an excessive torque, or damage is caused to tires or a vehicle suspension.

Furthermore, there are many different types of flanges for wheel hub modification, resulting in different wheel tracks after modification. Therefore, the existing positioning method using positions on a servo motor encoder cannot be universally applied to vehicles that have wheel hubs modified. Even if one or more positional parameters are particularly developed for wheel hub modification, battery swapping requirements of vehicles with diverse wheel hub modification cannot be met.

Accordingly, a new wheel positioning method is need in the art to resolve the above problems.

### Summary of the Disclosure

To resolve at least one of the above-described problems in the prior art, in particular, the problem of poor applicability of an existing four-wheel positioning method for a battery charging and swapping station, the invention is set out in the appended set of claims 1-15.

The wheel positioning method of the disclosure adopts a new idea of four-wheel positioning of using a torque as a determining criterion to implement wheel positioning, which may improve applicability of the positioning method and make the positioning method applicable to all types of wheel hubs. In addition, this control method requires no complex calculation process, greatly reducing a calculation amount. Two repeated times of positioning adequately ensure that a position of a vehicle can be effectively corrected to an accurate position for battery swapping. Specifically, as described in Background Art, in the existing technology, four-wheel positioning during battery swapping is one-time positioning, that is, positioning is implemented by setting working position parameters of push rods for four wheels through servo encoders of the push rods for the four wheels. Such a positioning manner inevitably features monotony and limitation. The positioning method of the disclosure proposes an idea completely different from that of the existing technology, especially using the torque as a determining criterion and performing two times of positioning. To be specific, a large torque is used at the first time to initially position a vehicle to implement position correction of a vehicle body, and a smaller torque is used at the second time to repeatedly position the vehicle to implement centring of the vehicle body, which can implement accurate centring of a vehicle of any model without knowing parameters such as a model, or a wheel track of the vehicle, and ensure that the vehicle is positioned in an accurate position for battery swapping.

Further, the wheel push members are controlled in groups in the disclosure, which can ensure a positioning effect of the vehicle and prevent the vehicle from being skewed.

Further, whether there is a wheel push member having an overrunning torque is determined based on a moving distance and a third real-time torque of each wheel push member, and when there is a wheel push member having an overrunning torque, the wheel push member is controlled to stop moving, so that overload protection may be implemented during wheel positioning.

Further, determining for stagewise overload protection is performed based on a moving distance, so that it is more conducive to protecting a suspension and tires of the vehicle from being damaged.

### Brief Description of the Drawings

The wheel positioning method and system, a medium, an apparatus, and a battery charging and swapping station of the disclosure are described below with reference to the accompanying drawings. In the accompanying drawings:
FIG. 1 is a schematic diagram of a battery swapping process of a vehicle according to the disclosure;
FIG. 2 is a flowchart of a Wheel positioning method according to the disclosure;
FIG. 3 is a logic diagram of a possible implementation of a wheel positioning method according to the disclosure; and
FIG. 4 is a diagram of a battery swap system for a vehicle according to the disclosure.

List of reference numerals
1: vehicle with a battery to be swapped; 11: wheel; 12: traction battery; 2: battery swap platform; 21: wheel push member;
100: wheel positioning system; 110: obtaining module; 120: determining module; 130: control module; 140: alarm module.

### Detailed Description of Embodiments

Preferred embodiments of the disclosure are described below with reference to the accompanying drawings. Those skilled in the art should understand that these embodiments are only used to explain the technical principles of the disclosure, and are not intended to limit the scope of protection of the disclosure. For example, although this implementation is described in combination with a centring mechanism that pushes a wheel inward from the outer side of the wheel, this is not intended to limit the scope of protection of the disclosure. Those skilled in the art may apply the disclosure to another application scenario without departing from the principle of the disclosure. For example, a control method of the disclosure may also be applied to a centring mechanism that pushes a wheel outward from the inner side of the wheel.

It should be noted that in descriptions of the disclosure, the terms such as "front", "rear", "left", or "right" indicates a direction or a positional relationship shown in the drawings, which are only for convenience of description, rather than to indicate or imply that an apparatus or a component must have a specific orientation, or be constructed and operated in a specific orientation. Therefore, these terms cannot be interpreted as a limitation on the embodiments of the disclosure. In addition, the terms "first", "second", and "third" are for descriptive purposes only, and may not be interpreted as indicating or implying relative importance.

In addition, it should also be noted that, in the descriptions of the disclosure, the terms "mount", "engage", and "connect" should be interpreted in a broad sense unless explicitly defined and limited otherwise, which, for example, may mean a fixed connection, a detachable connection or an integral connection; or may mean a mechanical connection or an electrical connection; may be a direct connection, or an indirect connection through an intermediate medium. For those skilled in the art, the specific meaning of the above-mentioned terms in the disclosure can be interpreted according to the specific situation.

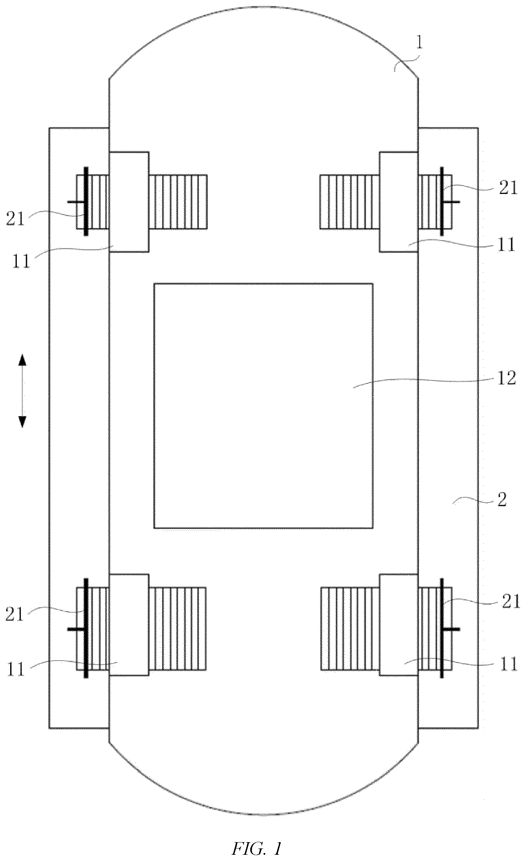

Reference is first made to FIG. 1. A battery charging and swapping station of the disclosure is introduced. FIG. 1 is a schematic diagram of a battery swapping process of a vehicle according to the disclosure.

As shown in FIG. 1, in a possible application scenario, the battery charging and swapping station includes a battery swap platform 2 and a centring mechanism. The battery swap platform 2 is provided with a V-shaped roller set and an I-shaped roller set respectively at two ends in a length direction of a vehicle 1 with a battery to be swapped, to implement positioning, in the length direction of the vehicle 1 with a battery to be swapped, of the vehicle 1 with a battery to be swapped and support, in a width direction of the vehicle 1 with a battery to be swapped, the vehicle 1 with a battery to be swapped to facilitate movement, in the width direction, of the vehicle 1 with a battery to be swapped. The centring mechanism includes four wheel push members 21, where in the disclosure, the four wheel push members 21 push four wheels 11 inward from the outer sides, with each wheel push member 21 pushing one wheel 11. The wheel push member 21 may be a positioning push rod, and the positioning push rod is in transmissive connection with a drive motor through a speed reducer, where each positioning push rod may be connected to one drive motor. When a drive motor is energized, power of the motor is transmitted through the speed reducer to a positioning push rod connected to the drive motor, thereby driving the positioning push rod to move inward in the width direction of the vehicle until the positioning push rod abuts against the outer side of the wheel 11 and thus moves the vehicle.

In a battery swapping process, the vehicle 1 with a battery to be swapped enters the battery swap platform 2 and is positioned by the V-shaped roller set and the I-shaped roller set in a forward direction. Then, the centring mechanism performs action, and the four positioning push rods move inward in the width direction of the vehicle 1 with a battery to be swapped, to move the wheels 11 and thus position the wheels 11 in the width direction. After the vehicle is positioned in both the length direction and the width direction, a battery swap robot in the battery charging and swapping station replaces a traction battery 12 mounted on a vehicle chassis.

It should be noted that the above-described specific implementation of the battery charging and swapping station is only used as example for description but not intended to limit the scope of protection of the disclosure. On the premise that the battery charging and swapping station includes the battery swap platform 2 and the centring mechanism, those skilled in the art may adjust a specific arrangement of the battery charging and swapping station without departing from the principle of the disclosure. For example, those skilled in the art may adjust the V-shaped roller set and the I-shaped roller set and replace them with other apparatuses capable of positioning a vehicle in a length direction of the vehicle. For another example, those skilled in the art may also adjust the centring mechanism, provided that the centring mechanism can implement centring of the vehicle by pushing the wheels 11.

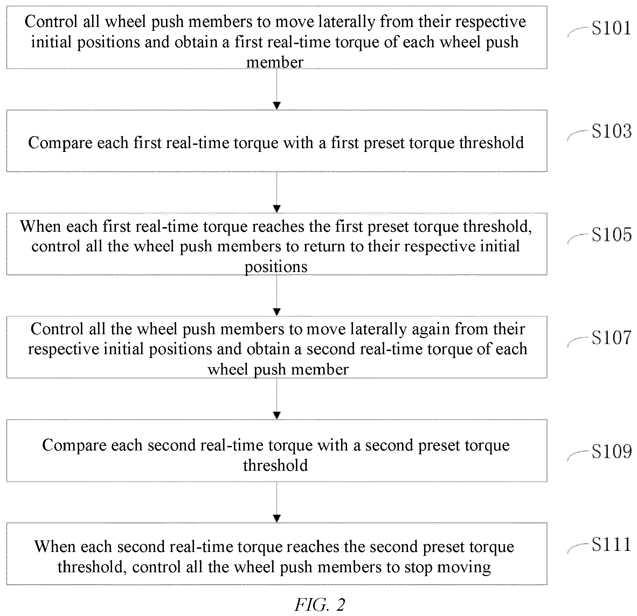

A wheel positioning method of the disclosure is described below with reference to FIG. 2 and using the above-described battery charging and swapping station as an example. FIG. 2 is a flowchart of a wheel positioning method according to the disclosure.

As shown in FIG. 2, to resolve the problem of poor applicability of an existing four-wheel positioning method for a battery charging and swapping station, the wheel positioning method of the disclosure mainly includes the following steps:
In S101, all wheel push members are controlled to move laterally from their respective initial positions and a first real-time torque of each wheel push member is obtained. For example, the initial positions may be positions at which the positioning push rods are farthest from a longitudinal centerline of the battery swap platform. Each time wheel positioning begins, the four positioning push rods move inward in the width direction (that is, the lateral direction) of the vehicle from the initial positions. During movement, the first real-time torque of each positioning push rod is obtained, where the first real-time torque may be an output torque of a motor or an output torque of an output shaft of a speed reducer connected to the motor. A manner of obtaining an output torque of the motor or a manner of obtaining an output torque of the output shaft of the speed reducer is conventional technical means to those skilled in the art, and detains are not described in the disclosure.
In S103, each first real-time torque is compared with a first preset torque threshold. For example, the first preset torque threshold is set in advance, and the first real-time torque changes as the four positioning push rods come into contact with the wheels in the lateral movement process. In a changing process of the first real-time torque, the first real-time torque is compared with the first preset torque threshold, to determine whether the four positioning push rods are all in effective contact with the wheels. In this case, the first real-time torque may be compared with the first preset torque threshold by taking a difference or quotient therebetween, etc.
In S105, when each first real-time torque reaches the first preset torque threshold, all the wheel push members are controlled to return to their respective initial positions. For example, when all the positioning push rods are in contact with the wheels, the first real-time torques corresponding to the four positioning push rods all start to increase. When each of the first real-time torques reaches the first preset torque threshold, it is proved that the four positioning push rods have been in effective contact with the wheels of the vehicle with a battery to be swapped, and in this case, a position of the vehicle is effectively corrected under the action of the four push rods, thereby implementing preliminary positioning. Then, all the positioning push rods are controlled to return to their respective initial positions, that is, all the positioning push rods are controlled to return to the positions farthest from the centerline of the battery swap platform.
In S107, all the wheel push members are controlled to move laterally again from their respective initial positions and a second real-time torque of each wheel push member is obtained. For example, after all the positioning push rods return to their respective initial positions, the four positioning push rods are controlled again to move inward (that is, laterally) from their respective initial positions along the width direction of the vehicle. During movement, the second real-time torque of each positioning push rod is obtained. A manner of obtaining the second real-time torque is similar to the manner described above, and details are not described herein again.
In S109, each second real-time torque is compared with a second preset torque threshold. For example, in the disclosure, the first preset torque threshold is greater than the second preset torque threshold, and the second real-time torque changes as the four positioning push rods come into contact with the wheels again in the lateral movement process. In a changing process of the second real-time torque, the second real-time torque is compared with the second preset torque threshold, to determine whether the four positioning push rods are all in effective contact with the wheels. In this case, the second real-time torque may also be compared with the second preset torque threshold by taking a difference or quotient therebetween, etc.
In S111, when each second real-time torque reaches the second preset torque threshold, all the wheel push members are controlled to stop moving. For example, when all the positioning push rods are in contact with the wheels, the second real-time torques corresponding to the four positioning push rods all start to increase. When each second real-time torque reaches the second preset torque threshold, it is proved that all the four positioning push rods have been in effective contact with the wheels of the vehicle with a battery to be swapped, and in this case, the vehicle is centered under the action of the four push rods, thereby implementing final positioning. At this time, the positioning process is completed, and subsequent battery swapping steps may be performed.

Unlike the existing four-wheel positioning manner in which positioning is implemented by setting working position parameters by servo encoders of the push rods for four wheels, which features monotony and limitation, the wheel positioning method of the disclosure adopts a new idea of four-wheel positioning of using a torque as a determining criterion to implement adaptive positioning of the wheels, which may improve applicability of the positioning method and make the positioning method applicable to all types of wheel hubs. In addition, this control method requires no complex calculation process, greatly reducing a calculation amount. Through the manner of two repeated times of positioning, that is, the first time of positioning which implements position correction of a vehicle body using a large push-rod torque, and the second time of positioning which implements centring of the vehicle body using a smaller push-rod torque, it is possible to implement accurate centring of the vehicle without knowing a wheel track, and ensure that the vehicle is positioned in an accurate position for battery swapping.

Preferred implementations of the wheel positioning method of the disclosure are described below.

In an implementation, the wheel positioning method further includes, before S105, the following steps: when first real-time torques of two wheel push members corresponding to front wheels each reach the first preset torque threshold, controlling the two wheel push members corresponding to the front wheels to stop moving; and when first real-time torques of two wheel push members corresponding to rear wheels each reach the first preset torque threshold, controlling the two wheel push members corresponding to the rear wheels to stop moving.

For ease of description, in the following embodiments, the four positioning push rods are named as a left front push rod, a right front push rod, a left rear push rod, and a right rear push rod, respectively according to orientation shown in FIG. 1. In the disclosure, the four positioning push rods are classified into two groups, where the left front push rod and the right front push rod are classified into one group, and the left rear push rod and the right rear push rod are classified into the other group. Through determining of whether each push rod group reaches the first preset torque threshold, it is determined whether to control the two positioning push rods in the push rod group to stop moving. Specifically, after the first real-time torques of the four positioning push rods are obtained, whether both the left front push rod and the right front push rod reach the first preset torque threshold is determined. If either of them does not reach the first preset torque threshold, the two push rods are controlled to continuously move inward; if both the left front push rod and the right front push rod reach the first preset torque threshold, the left front push rod and the right front push rod are both controlled to stop moving. Similarly, during movement of the positioning push rods, whether both the left rear push rod and the right rear push rod reach the first preset torque threshold is determined. If either of them does not reach the first preset torque threshold, the two positioning push rods are controlled to continuously move inward; if both the left rear push rod and the right rear push rod reach the first preset torque threshold, the left rear push rod and the right rear push rod are both controlled to stop moving.

The four positioning push rods are divided into two groups, and when the positioning push rods in each push rod group reach the first preset torque threshold, the push rod group is controlled to stop moving, so that the wheel positioning method of the disclosure can ensure relative centring of the vehicle by applying thrust to two wheels at the same time by two positioning push rods in the same group, and prevent the vehicle from being skewed due to a halt of a single positioning push rod in the positioning process.

In an implementation, the first preset torque threshold and the second preset torque threshold are determined based on a rated torque of the wheel push member. In the disclosure, a value of the rated torque is determined based on a position at which a torque is collected. If a collected real-time torque of the positioning push rod is the output torque of the motor, the rated torque is a rated torque of the motor at delivery; and if the collected real-time torque of the positioning push rod is the output torque of the output shaft of the speed reducer, the rated torque is a torque obtained by multiplying the rated torque of the motor by a transmission ratio and a transmission efficiency coefficient of the speed reducer. In other words, the rated torque in the disclosure is determined based on a rated parameter of a driving mechanism of the positioning push rod.

In a specific implementation, the first preset torque threshold is 40% to 55% of the rated torque and the second preset torque threshold is 20% to 40% of the rated torque. More preferably, the first preset torque threshold in the disclosure may be 50% of the rated torque and the second preset torque threshold may be 30% of the rated torque.

After repeated observation, analysis, comparison, and validation through DOE experimental tests, the applicants of the disclosure have concluded that in the first time of positioning, a torque is required to be relatively large because a vehicle body is relatively skewed. When the first preset torque threshold is set to be less than 40% of the rated torque, there is occasionally a case in which a position of the vehicle body is not corrected but the first real-time torque approaches or even reaches the first preset torque threshold, resulting in a poor position correction effect of the vehicle body. When the first preset torque threshold is set to be greater than 60% of the rated torque, tires are compressed and deformed considerably, where long-term compression may accelerate tire damage. Therefore, in the disclosure, the first preset torque threshold is set to be greater than or equal to 40% of the rated torque and less than or equal to 55% of the rated torque. Further, setting the first preset torque threshold to 50% of the rated torque can ensure initial position correction of the vehicle and protect the vehicle tires to some extent.

As the position of the vehicle is basically corrected after the first time of positioning, though with a poor effect of centring, the second time of positioning is mainly for centring of the vehicle, and in this case, a torque required for each positioning push rod is not large. After repeated observation, analysis, comparison, and validation through DOE experimental tests, the applicants of the disclosure have concluded that in the second time of positioning, when the second preset torque threshold is set to less than 20% of the rated torque, some of the positioning push rods may have a large torque that approaches or is even greater than the second preset torque threshold due to assembly consistency, which causes the push rods to stop moving before the vehicle reaches a centring position. When the second preset torque threshold is set to greater than 40% of the rated torque, all the four wheels are subjected to a large torque, and as can be learned from the test, the tires are deformed considerably, which may accelerate tire damage in the long term. Therefore, in the disclosure, the first preset torque threshold is set to be greater than or equal to 20% of the rated torque and less than or equal to 40% of the rated torque. Further, setting the second preset torque threshold to 30% of the rated torque can make the vehicle be accurately centered and avoid a large torque caused by assembly consistency or other issues.

**In** the DOE method, comprehensive cross-validation is performed on multiple impact factors, to effectively simulate all extreme situations that may be encountered **in** actual operation. The test features wide coverage and high reliability. Limiting a range of the first preset torque threshold, initial alignment of the wheels can be implemented and a risk of tire damage can be reduced. Limiting a range of the second preset torque threshold, accuracy of vehicle centring can be ensured, and the situation of a large torque caused by assembly consistency or other issues can be avoided.

In an implementation, the wheel positioning method further includes: obtaining a moving distance and a third real-time torque of each wheel push member during positioning; determining, based on the moving distance and the third real-time torque, whether there is a wheel push member having an overrunning torque; and if there is a wheel push member having an overrunning torque, controlling the wheel push member having an overrunning torque to stop moving.

To prevent an abnormal torque (for example, an excessive torque of a particular positioning push rod) during wheel positioning from causing damage to tires and wheel hubs of the vehicle, the disclosure further provides torque overload protection. Specifically, during wheel positioning, the moving distance and the third real-time torque of each positioning push rod are obtained, and whether the current torque of each positioning push rod overruns is determined based on the moving distance and the third real-time torque. If there is a positioning push rod having an overrunning torque, it is determined that the positioning push rod has an abnormal torque and needs to stop moving to protect the vehicle from damage.

In a preferred implementation, whether there is a wheel push member having an overrunning torque may be determined in the following manners: comparing the moving distance with a preset distance threshold; when the moving distance is less than or equal to the preset distance threshold, comparing the third real-time torque with a third preset torque threshold; and when the third real-time torque is greater than the third preset torque threshold, determining that there is a wheel push member having an overrunning torque; or when the moving distance is greater than the preset distance threshold, comparing the third real-time torque with a fourth preset torque threshold; and when the third real-time torque is greater than the fourth preset torque threshold, determining that there is a wheel push member having an overrunning torque, where the third preset torque threshold is greater than the fourth preset torque threshold.

In the disclosure, the determining procedure may be set in a controller (for example, PLC) that controls movement of the positioning push rod, and the controller obtains the moving distance and the real-time torque value of each positioning push rod, so that whether there is a positioning push rod having an overrunning torque is determined.

In a specific implementation, the preset distance threshold is determined based on a theoretical extension distance of the wheel push member, and the third preset torque threshold and the fourth preset torque threshold are determined based on the rated torque of the wheel push member. The theoretical extension distance in the disclosure refers to a length by which the positioning push rod could extend for an unmodified vehicle. The theoretical extension distance may be determined based on a specific model of the unmodified vehicle, or may be set by those skilled in the art based on an actual situation (for example, the theoretical extension distance may be set to a maximum extension length or a specific fixed length). The theoretical extension distance being determined based on a specific model of a vehicle is used as an example. Before battery swapping, a battery charging and swapping station usually needs to match a corresponding battery based on a specific model of a vehicle. Therefore, a manufacturer only needs to preset a preset distance threshold of a positioning push rod corresponding to the specific model of the vehicle on the PLC in advance. Then, in a process of battery matching and swapping of the vehicle, the corresponding preset distance threshold is invoked directly based on the obtained specific model of the vehicle.

Further, the theoretical extension distance may be determined in the following manners: The left front push rod and the right front push rod are used as an example. First, an outer wheel track between two front wheels of an unmodified vehicle and initial positions of the left front push rod and the right front push rod on the battery swap platform are determined. Then, the outer wheel track is subtracted from a distance from the left front push rod to the right front push rod, and an obtained distance value is divided by two, to obtain the theoretical extension distance of a single positioning push rod.

In a specific implementation, the preset distance threshold is 93% to 97% of the theoretical extension distance, and more specifically, the preset distance threshold is 95% of the theoretical extension distance.

The applicants found after experimental tests that when a moving distance of the positioning push rod is within 0% to 95% of the theoretical extension distance, the vehicle body is still skewed, in which case a specific push rod may push the tire with a large torque. When the moving distance of the positioning push rod is greater than 95% of the theoretical extension distance, the position of the vehicle body is basically corrected, in which case a required torque for the positioning push rod is relatively small. Therefore, the preset distance threshold being 95% of the theoretical extension distance is used as a basis for stagewise positioning in the disclosure. When the moving distance of the positioning push rod is less than or equal to the preset distance threshold, the third preset torque threshold that is larger is used to determine whether the positioning push rod has an overrunning torque; and when the moving distance of the positioning push rod is greater than the preset distance threshold, the fourth preset torque threshold that is smaller is used to determine whether the positioning push rod has an overrunning torque.

In a specific implementation, the third preset torque threshold is 70% to 80% of the rated torque and the fourth preset torque threshold is 55% to 65% of the rated torque. More specifically, the third preset torque threshold is 75% of the rated torque and the fourth preset torque threshold is 60% of the rated torque. For the meaning of the rated torque, reference may be made to the above definitions, and details are not described herein again.

The applicants found after experimental tests that when the vehicle body is still skewed, a specific positioning push rod may push the tire with a large torque, and therefore, the third preset torque threshold should be set to approach a maximum allowable torque value as much as possible. After the position of the vehicle body is basically corrected, a torque of the positioning push rod is small at this time, and the fourth preset torque threshold only needs to cover as much as possible torques used during actual action of all the positioning push rods.

Specifically, after theoretical calculation and actual tests of the applicants, it is found that the third preset torque threshold that is 75% of the rated torque is a marginal torque that will not cause damage to a suspension and tires of the vehicle. Therefore, 75% of the rated torque is selected as the third preset torque threshold in the disclosure. The third preset torque threshold that is set to less than 70% of the rated torque is much less than the maximum allowable torque value, and the third preset torque threshold that is set to greater than 80% of the rated torque tends to cause damage to tires, suspension, etc.

Existing test data shows that setting the torque threshold to 50% of the rated torque may cover torques used during the actual action of all the positioning push rods, and on this basis, it is appropriate to increase the fourth preset torque threshold by 10%. Therefore, 60% of the rated torque is selected as the fourth preset torque threshold. The fourth preset torque threshold being set to less than 55% of the rated torque or greater than 65% of the rated torque cannot bring a better protection effect.

Whether there is a positioning push rod having an overrunning torque is determined based on the moving distance and the third real-time torque of each positioning push rod, and when there is a positioning push rod having an overrunning torque, the positioning push rod is controlled to stop moving, so that overload protection may be implemented during wheel positioning. Determining for stagewise overload protection is performed based on a moving distance, so that it is more conducive to protecting a suspension and tires of the vehicle from being damaged.

In an implementation, the wheel positioning method further includes: giving an overload alarm when or after the wheel push member having an overrunning torque is controlled to stop moving.

For example, the PLC is disposed to be communicatively connected with a main controller, so that alarm information is displayed on an operation screen through main control communication. The overload alarm includes but is not limited to a text alarm, an audible and visual alarm, etc.

Those skilled in the art can understand that the above preferred implementations are only used to explain the principle of the disclosure and are not intended to limit the scope of protection of the disclosure. Those skilled in the art may adjust the above implementations without departing from the principle of the disclosure, so that the disclosure can be applied to more specific application scenarios.

For example, although the above implementations are described in combination with grouped control of positioning push rods, such manner is not the only manner of controlling the positioning push rods to move in specific ways. Those skilled in the art may use another control manner to control a timing of controlling the positioning push rod to stop moving. For example, when the first real-time torques of all the four positioning push rods exceed the first preset torque threshold, all the positioning push rods are controlled to stop moving at the same time, and then to return to their respective initial positions at the same time.

For another example, although the above implementations are described by comparing the moving distance of the positioning push rod with the preset distance threshold first, and then comparing the third real-time torque with the corresponding preset torque threshold, an order is not limited thereto, and those skilled in the art may change the order of the comparison steps. For example, according to a table of correspondences between moving distances and preset torque thresholds, whether a real-time torque corresponding to a current moving distance overruns is directly determined.

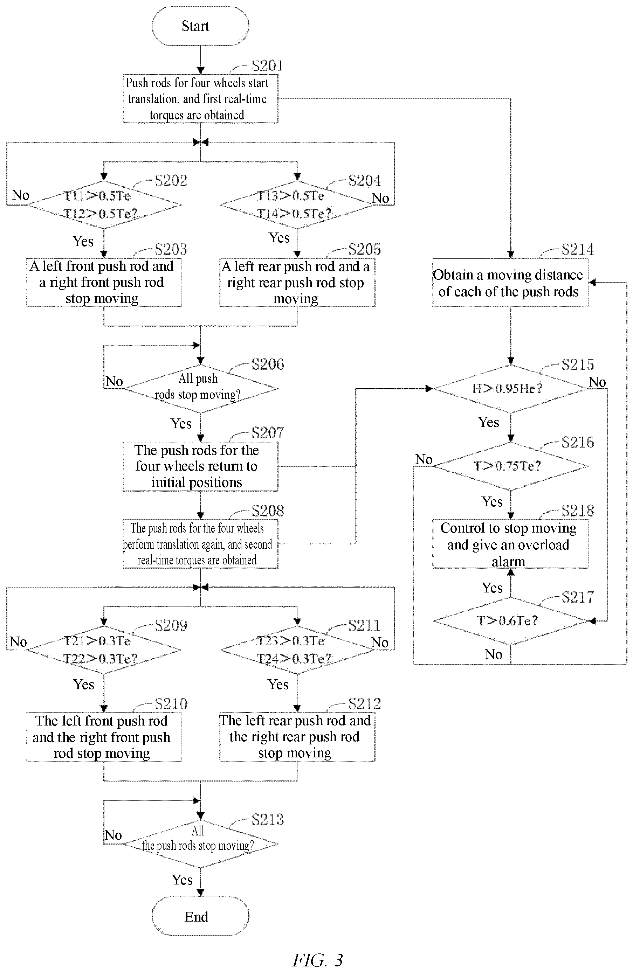

A possible wheel positioning process of the disclosure is described below with reference to FIG. 3. Here, FIG. 3 is a logic diagram of a possible implementation of a wheel positioning method according to the disclosure.

As shown in FIG. 3, in a possible implementation, after a vehicle with a battery to be swapped enters a battery swap platform and is positioned by a V-shaped roller set and the I-shaped roller set in a length direction, the following steps are performed.

In S201, four positioning push rods are controlled to translate inward, and during the translation, first real-time torques of the four positioning push rods are obtained. Then, S202 and S204 are performed. A first real-time torque of a left front push rod is T11, a first real-time torque of a right front push rod is T12, a first real-time torque of a left rear push rod is T13, and a first real-time torque of a right rear push rod is T14.

In S202, whether T11 > 0.5Te and T12 > 0.5Te is determined. If they are true, S203 is performed; if they are not true, the process returns to the previous step to re-obtain first real-time torques T11 and T12 and perform determining again. Te is a rated torque of the positioning push rod.

In S203, the left front push rod and the right front push rod are controlled to stop moving. Then, S206 is performed.

In S204, whether T13 > 0.5Te and T14 > 0.5Te is determined. If they are true, S205 is performed; if they are not true, the process returns to the previous step to re-obtain the first real-time torques T13 and T14 and perform determining again.

In S205, the left rear push rod and the right rear push rod are controlled to stop moving. Then, S206 is performed.

In S206, whether all the push rods stop moving is determined. If yes, S207 is performed; if not, the process returns to the determining step again.

In S207, the four positioning push rods are controlled to return to their respective initial positions. Then, S208 is performed.

In S208, the four positioning push rods are controlled to translate inward again, and during the translation, second real-time torques of the four positioning push rods are obtained. Then, S209 and S211 are performed. A second real-time torque of the left front push rod is T21, a second real-time torque of the right front push rod is T22, a second real-time torque of the left rear push rod is T23, and a second real-time torque of the right rear push rod is T24.

In S209, whether T21 > 0.3Te and T22 > 0.3Te is determined. If they are true, S210 is performed; if they are not true, the process returns to the previous step to re-obtain the second real-time torques T21 and T22 and perform determining again.

In S210, the left front push rod and the right front push rod are controlled to stop moving. Then, S213 is performed.

In S211, whether T23 > 0.3Te and T24 > 0.3Te is determined. If they are true, S212 is performed; if they are not true, the process returns to the previous step to re-obtain second real-time torques T23 and T24 and perform determining again.

In S212, the left rear push rod and the right rear push rod are controlled to stop moving. Then, S213 is performed.

In S213, whether all the push rods stop moving is determined. If yes, four-wheel positioning is completed. Otherwise, if not, the process returns to the determining step again.

In addition, the following steps are performed during movement of the positioning push rods:
In S214, a moving distance H of each of the four positioning push rods is obtained. Then, S215 is performed.
In S215, for each positioning push rod, whether H > 0.95He is determined. If it is true, S216 is performed. Otherwise, if it is not true, S217 is performed. He is a theoretical extension distance of the positioning push rod.
In S216, whether T > 0.75Te is determined. If it is true, S218 is performed. Otherwise, if it is not true, the process returns to S214 to re-obtain the moving distance and a current torque of the positioning push rod and perform determining again. T is the current torque value of the positioning push rod.
In S217, whether T > 0.6Te is determined. If it is true, S218 is performed. Otherwise, if it is not true, the process returns to S214 to re-obtain the moving distance and a current torque of the positioning push rod and perform determining again.
In S218, a positioning push rod having an overrunning torque is controlled to stop moving, and an overload alarm is given.

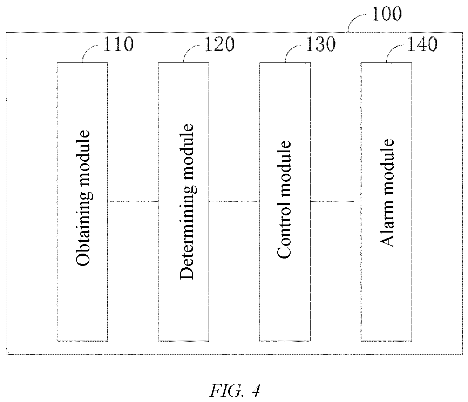

A wheel positioning system of the disclosure is briefly described below with reference to FIG. 4. Here, FIG. 4 is a diagram of a wheel positioning system of the disclosure.

As shown in FIG. 4, the wheel positioning system 100 of the disclosure includes an obtaining module 110, a determining module 120, and a control module 130. The obtaining module 110 is configured to obtain a first real-time torque of each wheel push member when all wheel push members move laterally from their respective initial positions, and obtain a second real-time torque of each wheel push member when all the wheel push members are controlled to move laterally again from their respective initial positions. The determining module 120 is configured to compare each first real-time torque with a first preset torque threshold, and compare each second real-time torque with a second preset torque threshold. The control module 130 is configured to control all the wheel push members to move laterally from their respective initial positions; when each first real-time torque reaches the first preset torque threshold, control all the wheel push members to return to their respective initial positions; control all the wheel push members to move laterally again from their respective initial positions; and when each second real-time torque reaches the second preset torque threshold, control all the wheel push members to stop moving, where the first preset torque threshold is greater than the second preset torque threshold. In an implementation, for descriptions of specific implementation of functions, reference may be made to step S101 to step S111.

In an implementation, the control module 130 is further configured to: when first real-time torques of two wheel push members corresponding to front wheels each reach the first preset torque threshold, control the two wheel push members corresponding to the front wheels to stop moving; and when first real-time torques of two wheel push members corresponding to rear wheels each reach the first preset torque threshold, control the two wheel push members corresponding to the rear wheels to stop moving. In an implementation, for descriptions of specific implementation of functions, reference may be made to the method steps described above.

In an implementation, the first preset torque threshold and the second preset torque threshold are determined based on a rated torque of the wheel push member. In an implementation, for descriptions of specific implementation of functions, reference may be made to the method steps described above.

In an implementation, the first preset torque threshold is 40% to 55% of the rated torque and the second preset torque threshold is 20% to 40% of the rated torque. In an implementation, for descriptions of specific implementation of functions, reference may be made to the method steps described above.

In an implementation, the obtaining module 110 is further configured to obtain a moving distance and a third real-time torque of each wheel push member during positioning. The determining module 120 is further configured to determine, based on the moving distance and the third real-time torque, whether there is a wheel push member having an overrunning torque. The control module 130 is further configured to: if there is a wheel push member having an overrunning torque, control the wheel push member having an overrunning torque to stop moving. In an implementation, for descriptions of specific implementation of functions, reference may be made to the method steps described above.

In an implementation, the determining module 120 determines, based on the moving distance and the third real-time torque, whether there is a wheel push member having an overrunning torque, in the following manners: comparing the moving distance with a preset distance threshold; when the moving distance is less than or equal to the preset distance threshold, comparing the third real-time torque with a third preset torque threshold; and when the third real-time torque is greater than the third preset torque threshold, determining that there is a wheel push member having an overrunning torque; or when the moving distance is greater than the preset distance threshold, comparing the third real-time torque with a fourth preset torque threshold; and when the third real-time torque is greater than the fourth preset torque threshold, determining that there is a wheel push member having an overrunning torque, where the third preset torque threshold is greater than the fourth preset torque threshold. In an implementation, for descriptions of specific implementation of functions, reference may be made to the method steps described above.

In an implementation, the wheel positioning system 100 further includes: an alarm module 140 configured to give an overload alarm when or after the wheel push member having an overrunning torque is controlled to stop moving. In an implementation, for descriptions of specific implementation of functions, reference may be made to the method steps described above.

In an implementation, the preset distance threshold is determined based on a theoretical extension distance of the wheel push member; and/or the third preset torque threshold and the fourth preset torque threshold are determined based on a rated torque of the wheel push member. In an implementation, for descriptions of specific implementation of functions, reference may be made to the method steps described above.

In an implementation, the preset distance threshold is 93% to 97% of the theoretical extension distance; and/or the third preset torque threshold is 70% to 80% of the rated torque and the fourth preset torque threshold is 55% to 65% of the rated torque. In an implementation, for descriptions of specific implementation of functions, reference may be made to the method steps described above.

It should be noted that the division of the above function modules (such as the obtaining module 110, the determining module 120, the control module 130, and the alarm module 140) is merely used as an example for describing the wheel positioning system 100 provided by the embodiment, and in actual application, the above function modules may be completed by different function units according to requirements. In other words, the function modules in the embodiment are decomposed or combined, for example, the function modules in the embodiment may be integrated into one function module, or may alternatively be divided into a plurality of sub-modules, to complete all or some of the above-described functions. The names of the functional modules involved in the embodiments are merely for distinguishing purpose and are not to be construed as limiting the disclosure.

Those skilled in the art can understand that all or some of the procedures in the method of the above embodiments of the disclosure may also be implemented by a computer program instructing relevant hardware. The computer program may be stored in a computer-readable storage medium, and when the computer program is executed by a processor, the steps of the above method embodiments can be implemented. The computer program includes computer program code, which may be in a source code form, an object code form, an executable file form, some intermediate forms, or the like. The computer-readable storage medium may include: any entity or apparatus that can carry the computer program code, such as a medium, a USB flash drive, a removable hard disk, a magnetic disk, an optical disc, a computer memory, a read-only memory, a random access memory, an electrical carrier signal, a telecommunications signal, and a software distribution medium. It should be noted that the content included in the computer-readable storage medium can be appropriately added or deleted depending on requirements of the legislation and patent practice in a jurisdiction. For example, in some jurisdictions, according to the legislation and patent practice, the computer-readable storage medium does not include an electrical carrier signal and a telecommunications signal.

Various embodiments regarding components in the disclosure may be implemented in hardware, or implemented by software modules running on one or more processors, or implemented in combinations thereof. Those skilled in the art should understand that a microprocessor or a digital signal processor (DSP) may be used in practice to implement some or all of the functions of some or all of the components in the server and client according to the embodiments of the disclosure. The disclosure may alternatively be implemented as devices or device programs (for example, PC programs and PC program products) for performing some or all of the methods as described herein. Such programs for implementing the disclosure may be stored on a PC readable medium, or may be in the form of one or more signals. Such signals may be obtained by downloading from an Internet website, or provided on a carrier signal, or provided in any other form.

The disclosure further provides a computer-readable storage medium. In a computer-readable storage medium embodiment according to the disclosure, the computer-readable storage medium may be configured to store a program for performing the wheel positioning method of the method embodiment described above, where the program may be loaded and run by a processor to implement the wheel positioning method described above. For ease of description, only parts related to the embodiments of the disclosure are shown. For specific technical details that are not disclosed, reference may be made to the method part of the embodiments of the disclosure. The computer-readable storage medium may be a storage apparatus device formed by various electronic devices. Optionally, the computer-readable storage medium in this embodiment of the disclosure is a non-transitory computer-readable storage medium.

The disclosure further provides a control apparatus. In a control apparatus embodiment according to the disclosure, the control apparatus includes a processor and a memory. The memory may be configured to store a program for performing the wheel positioning method of the method embodiment described above. The processor may be configured to execute a program in the memory, where the program includes but is not limited to a program for performing the wheel positioning method of the method embodiment described above. For ease of description, only parts related to the embodiments of the disclosure are shown. For specific technical details that are not disclosed, reference may be made to the method part of the embodiments of the disclosure. The control apparatus may be an apparatus device formed by various electronic devices.

The disclosure further provides a battery charging and swapping station. The battery charging and swapping station includes a battery swap platform and a centring mechanism, where the centring mechanism includes four wheel push members. The battery charging and swapping station further includes a control apparatus described above.

## Claims

1. A wheel positioning method, applied to a battery (12) charging and swapping station, the battery (12) charging and swapping station comprising a battery swap platform and a centring mechanism, and the centring mechanism comprising four wheel push members (21), wherein the wheel positioning method comprises:
controlling all the wheel push members (21) to move in a lateral direction of a vehicle from their respective initial positions and obtaining a first real-time torque of each wheel push member (21);
comparing each first real-time torque with a first preset torque threshold;
**characterized by**:
when each first real-time torque reaches the first preset torque threshold, controlling all the wheel push members (21) to return to their respective initial positions;
controlling all the wheel push members (21) to move in the lateral direction of the vehicle again from their respective initial positions and obtaining a second real-time torque of each wheel push member (21);
comparing each second real-time torque with a second preset torque threshold; and
when each second real-time torque reaches the second preset torque threshold, controlling all the wheel push members (21) to stop moving,
wherein the first preset torque threshold is greater than the second preset torque threshold.

2. The wheel positioning method according to claim 1, wherein before the step of controlling all the wheel push members (21) to return to their respective initial positions, the wheel positioning method further comprises:
when first real-time torques of two wheel push members (21) corresponding to front wheels each reach the first preset torque threshold, controlling the two wheel push members (21) corresponding to the front wheels to stop moving; and
when first real-time torques of two wheel push members (21) corresponding to rear wheels each reach the first preset torque threshold, controlling the two wheel push members (21) corresponding to the rear wheels to stop moving.

3. The wheel positioning method according to claim 1 or 2, wherein the first preset torque threshold and the second preset torque threshold are determined based on a rated torque of the wheel push member (21).

4. The wheel positioning method according to claim 3, wherein the first preset torque threshold is 40% to 55% of the rated torque, and the second preset torque threshold is 20% to 40% of the rated torque.

5. The wheel positioning method according to any one of claims 1 to 4, wherein the wheel positioning method further comprises:
obtaining a moving distance and a third real-time torque of each wheel push member (21) during positioning;
determining, based on the moving distance and the third real-time torque, whether there is a wheel push member (21) having an overrunning torque; and
if there is a wheel push member (21) having an overrunning torque, controlling the wheel push member (21) having an overrunning torque to stop moving.

6. The wheel positioning method according to claim 5, wherein the step of determining, based on the moving distance and the third real-time torque, whether there is a wheel push member (21) having an overrunning torque further comprises:
comparing the moving distance with a preset distance threshold;
when the moving distance is less than or equal to the preset distance threshold, comparing the third real-time torque with a third preset torque threshold; and
when the third real-time torque is greater than the third preset torque threshold, determining that there is a wheel push member (21) having an overrunning torque; or
when the moving distance is greater than the preset distance threshold, comparing the third real-time torque with a fourth preset torque threshold; and
when the third real-time torque is greater than the fourth preset torque threshold, determining that there is a wheel push member (21) having an overrunning torque, wherein
the third preset torque threshold is greater than the fourth preset torque threshold.

7. The wheel positioning method according to claim 5 or 6, wherein the wheel positioning method further comprises:
giving an overload alarm when or after the wheel push member (21) having an overrunning torque is controlled to stop moving.

8. The wheel positioning method according to claim 6 or 7, wherein the preset distance threshold is determined based on a theoretical extension distance of the wheel push member (21); and/or the third preset torque threshold and the fourth preset torque threshold are determined based on a rated torque of the wheel push member (21).

9. The wheel positioning method according to claim 8, wherein the preset distance threshold is 93% to 97% of the theoretical extension distance; and/or the third preset torque threshold is 70% to 80% of the rated torque and the fourth preset torque threshold is 55% to 65% of the rated torque.

10. A wheel positioning system (100) applied to a battery (12) charging and swapping station, the battery (12) charging and swapping station comprising a battery swap platform and a centring mechanism, and the centring mechanism comprising four wheel push members (21), wherein the wheel positioning system (100) comprises:
an obtaining module (110) configured to obtain a first real-time torque of each wheel push member (21) when all the wheel push members (21) move in a lateral direction of a vehicle from their respective initial positions, and obtain a second real-time torque of each wheel push member (21) when all the wheel push members (21) are controlled to move in the lateral direction of the vehicle again from their respective initial positions;
a determining module (120) configured to compare each first real-time torque with a first preset torque threshold, and compare each second real-time torque with a second preset torque threshold; and
a control module (130) configured to control all the wheel push members (21) to move in the lateral direction of the vehicle from their respective initial positions;
**characterized in that** the control module (130) is further configured to: when each first real-time torque reaches the first preset torque threshold, control all the wheel push members (21) to return to their respective initial positions; control all the wheel push members (21) to move in the lateral direction of the vehicle again from their respective initial positions; and when each second real-time torque reaches the second preset torque threshold, control all the wheel push members (21) to stop moving,
wherein the first preset torque threshold is greater than the second preset torque threshold.

11. The wheel positioning system (100) according to claim 10, wherein the control module (130) is further configured to:
when first real-time torques of two wheel push members (21) corresponding to front wheels each reach the first preset torque threshold, control the two wheel push members (21) corresponding to the front wheels to stop moving; and
when first real-time torques of two wheel push members (21) corresponding to rear wheels each reach the first preset torque threshold, control the two wheel push members (21) corresponding to the rear wheels to stop moving.

12. The wheel positioning system (100) according to claim 10 or 11, wherein the first preset torque threshold and the second preset torque threshold are determined based on a rated torque of the wheel push member (21).

13. The wheel positioning system (100) according to claim 12, wherein the first preset torque threshold is 40% to 55% of the rated torque, and the second preset torque threshold is 20% to 40% of the rated torque.

14. The wheel positioning system (100) according to any one of claims 10 to 13, wherein the obtaining module (110) is further configured to obtain a moving distance and a third real-time torque of each wheel push member (21) during positioning;
the determining module (120) is further configured to determine, based on the moving distance and the third real-time torque, whether there is a wheel push member (21) having an overrunning torque; and
the control module (130) is further configured to: if there is a wheel push member (21) having an overrunning torque, control the wheel push member (21) having an overrunning torque to stop moving.

15. The wheel positioning system (100) according to claim 14, wherein the determining module determines, based on the moving distance and the third real-time torque, whether there is a wheel push member (21) having an overrunning torque, in the following manners:
comparing the moving distance with a preset distance threshold;
when the moving distance is less than or equal to the preset distance threshold, comparing the third real-time torque with a third preset torque threshold; and
when the third real-time torque is greater than the third preset torque threshold, determining that there is a wheel push member (21) having an overrunning torque; or
when the moving distance is greater than the preset distance threshold, comparing the third real-time torque with a fourth preset torque threshold; and
when the third real-time torque is greater than the fourth preset torque threshold, determining that there is a wheel push member (21) having an overrunning torque, wherein
the third preset torque threshold is greater than the fourth preset torque threshold.

## Patentansprüche

1. Radpositionierungsverfahren, angewendet auf eine Batterie(12)-lade- und -wechselstation, wobei die Batterie(12)-lade- und -wechselstation eine Batteriewechselplattform und einen Zentrierungsmechanismus umfasst und wobei der Zentrierungsmechanismus vier Raddrückelemente (21) umfasst, wobei das Radpositionierungsverfahren Folgendes umfasst:
Steuern aller Raddrückelemente (21), sich von ihren jeweiligen anfänglichen Positionen aus in einer lateralen Richtung eines Fahrzeugs zu bewegen, und Erhalten eines ersten Echtzeitdrehmoments jedes Raddrückelements (21);
Vergleichen jedes ersten Echtzeitdrehmoments mit einer ersten voreingestellten Drehmomentschwelle;
**gekennzeichnet durch**:
wenn jedes erste Echtzeitdrehmoment die erste voreingestellte Drehmomentschwelle erreicht, Steuern aller Raddrückelemente (21), zu ihren jeweiligen anfänglichen Positionen zurückzukehren;
Steuern aller Raddrückelemente (21), sich erneut von ihren jeweiligen anfänglichen Positionen aus in der lateralen Richtung zu bewegen, und Erhalten eines zweiten Echtzeitdrehmoments jedes Raddrückelements (21);
Vergleichen jedes zweiten Echtzeitdrehmoments mit einer zweiten voreingestellten Drehmomentschwelle; und
wenn jedes zweite Echtzeitdrehmoment die zweite voreingestellte Drehmomentschwelle erreicht, Steuern aller Raddrückelemente (21), sich nicht mehr zu bewegen, wobei die erste voreingestellte Drehmomentschwelle größer als die zweite voreingestellte Drehmomentschwelle ist.

2. Radpositionierungsverfahren nach Anspruch 1, wobei, vor dem Schritt des Steuerns aller Raddrückelemente (21), in ihre jeweiligen anfänglichen Positionen zurückzukehren, das Radpositionierungsverfahren ferner Folgendes umfasst:
wenn erste Echtzeitdrehmomente von zwei Raddrückelementen (21), die Vorderrädern entsprechen, jeweils die erste voreingestellte Drehmomentschwelle erreichen, Steuern der zwei Raddrückelemente (21), die den Vorderrädern entsprechen, sich nicht mehr zu bewegen; und
wenn erste Echtzeitdrehmomente von zwei Raddrückelementen (21), die Hinterrädern entsprechen, jeweils die erste voreingestellte Drehmomentschwelle erreichen, Steuern der zwei Raddrückelemente (21), die den Hinterrädern entsprechen, sich nicht mehr zu bewegen.

3. Radpositionierungsverfahren nach Anspruch 1 oder 2, wobei die erste voreingestellte Drehmomentschwelle und die zweite voreingestellte Drehmomentschwelle basierend auf einem Nenndrehmoment des Raddrückelements (21) bestimmt werden.

4. Radpositionierungsverfahren nach Anspruch 3, wobei die erste voreingestellte Drehmomentschwelle 40 % bis 55 % des Nenndrehmoments ist und wobei die zweite voreingestellte Drehmomentschwelle 20 % bis 40 % des Nenndrehmoments ist.

5. Radpositionierungsverfahren nach einem der Ansprüche 1 bis 4, wobei das Radpositionierungsverfahren ferner Folgendes umfasst:
Erhalten einer Bewegungsstrecke und eines dritten Echtzeitdrehmoments jedes Raddrückelements (21) während des Positionierens;
Bestimmen, basierend auf der Bewegungsstrecke und dem dritten Echtzeitdrehmoment, ob es ein Raddrückelement (21) gibt, das ein Freilaufdrehmoment aufweist; und wenn es ein Raddrückelement (21) gibt, das ein Freilaufdrehmoment aufweist, Steuern des Raddrückelements (21), das ein Freilaufdrehmoment aufweist, sich nicht mehr zu bewegen.

6. Radpositionierungsverfahren nach Anspruch 5, wobei der Schritt des Bestimmens basierend auf der Bewegungsstrecke und dem dritten Echtzeitdrehmoment, ob es ein Raddrückelement (21) gibt, das ein Freilaufdrehmoment aufweist, ferner Folgendes umfasst:
Vergleichen der Bewegungsstrecke mit einer voreingestellten Streckenschwelle;
wenn die Bewegungsstrecke kleiner als oder gleich der voreingestellten Streckenschwelle ist, Vergleichen des dritten Echtzeitdrehmoments mit einer dritten voreingestellten Drehmomentschwelle; und
wenn das dritte Echtzeitdrehmoment größer als die dritte voreingestellte Drehmomentschwelle ist, Bestimmen, dass es ein Raddrückelement (21) gibt, das ein Freilaufdrehmoment aufweist; oder
wenn die Bewegungsstrecke größer als die voreingestellte Streckenschwelle ist, Vergleichen des dritten Echtzeitdrehmoments mit einer vierten voreingestellten Drehmomentschwelle; und
wenn das dritte Echtzeitdrehmoment größer als die vierte voreingestellte Drehmomentschwelle ist, Bestimmen, dass es ein Raddrückelement (21) gibt, das ein Freilaufdrehmoment aufweist,
wobei die dritte voreingestellte Drehmomentschwelle größer als die vierte voreingestellte Drehmomentschwelle ist.

7. Radpositionierungsverfahren nach Anspruch 5 oder 6, wobei das Radpositionierungsverfahren ferner Folgendes umfasst:
Ausgeben eines Überlastalarms, wenn oder nachdem das Raddrückelement (21), das ein Freilaufdrehmoment aufweist, gesteuert wird, sich nicht mehr zu bewegen.

8. Radpositionierungsverfahren nach Anspruch 6 oder 7, wobei die voreingestellte Streckenschwelle basierend auf einer theoretischen Ausdehnungsstrecke des Raddrückelements (21) bestimmt wird; und/oder wobei die dritte voreingestellte Streckenschwelle und die vierte voreingestellte Streckenschwelle basierend auf einem Nenndrehmoment des Raddrückelements (21) bestimmt werden.

9. Radpositionierungsverfahren nach Anspruch 8, wobei die voreingestellte Streckenschwelle 93 % bis 97 % der theoretischen Ausdehnungsstrecke ist; und/oder die dritte voreingestellte Drehmomentschwelle 70 % bis 80 % des Nenndrehmoments ist und die vierte voreingestellte Drehmomentschwelle 55 % bis 65 % des Nenndrehmoments ist.

10. Radpositionierungssystem (100), angewendet auf eine Batterie(12)-lade- und -wechselstation, wobei die Batterie(12)-lade- und -wechselstation eine Batteriewechselplattform und einen Zentrierungsmechanismus umfasst und wobei der Zentrierungsmechanismus vier Raddrückelemente (21) umfasst, wobei das Radpositionierungssystem (100) Folgendes umfasst:
ein Erhaltemodul (110), ausgelegt zum Erhalten eines ersten Echtzeitdrehmoments jedes Raddrückelements (21), wenn sich alle Raddrückelemente (21) von ihren jeweiligen anfänglichen Positionen aus in einer lateralen Richtung eines Fahrzeugs bewegen, und Erhalten eines zweiten Echtzeitdrehmoments jedes Raddrückelements (21), wenn alle Raddrückelemente (21) gesteuert werden, sich von ihren jeweiligen anfänglichen Positionen aus erneut in der lateralen Richtung des Fahrzeugs zu bewegen;
ein Bestimmungsmodul (120), ausgelegt zum Vergleichen jedes ersten Echtzeitdrehmoments mit einer ersten voreingestellten Drehmomentschwelle, und Vergleichen jedes zweiten Echtzeitdrehmoments mit einer zweiten voreingestellten Drehmomentschwelle; und
ein Steuermodul (130), ausgelegt zum Steuern aller Raddrückelemente (21), sich von ihren jeweiligen anfänglichen Positionen aus in der lateralen Richtung des Fahrzeugs zu bewegen;
**dadurch gekennzeichnet, dass** das Steuermodul (130) ferner ausgelegt ist zum: wenn jedes erste Echtzeitdrehmoment die erste voreingestellte Drehmomentschwelle erreicht, Steuern aller Raddrückelemente (21), zu ihren jeweiligen anfänglichen Positionen zurückzukehren; Steuern aller Raddrückelemente (21), sich von ihren jeweiligen anfänglichen Positionen aus erneut in der lateralen Richtung des Fahrzeugs zu bewegen; und wenn jedes zweite Echtzeitdrehmoment die zweite voreingestellte Drehmomentschwelle erreicht, Steuern aller Raddrückelemente (21), sich nicht mehr zu bewegen,
wobei die erste voreingestellte Drehmomentschwelle größer als die zweite voreingestellte Drehmomentschwelle ist.

11. Radpositionierungssystem (100) nach Anspruch 10, wobei das Steuermodul (130) ferner ausgelegt ist zum:
wenn erste Echtzeitdrehmomente von zwei Raddrückelementen (21), die Vorderrädern entsprechen, jeweils die erste voreingestellte Drehmomentschwelle erreichen, Steuern der zwei Raddrückelemente (21), die den Vorderrädern entsprechen, sich nicht mehr zu bewegen; und
wenn erste Echtzeitdrehmomente von zwei Raddrückelementen (21), die Hinterrädern entsprechen, jeweils die erste voreingestellte Drehmomentschwelle erreichen, Steuern der zwei Raddrückelemente (21), die den Hinterrädern entsprechen, sich nicht mehr zu bewegen.

12. Radpositionierungssystem (100) nach Anspruch 10 oder 11, wobei die erste voreingestellte Drehmomentschwelle und die zweite voreingestellte Drehmomentschwelle basierend auf einem Nenndrehmoment des Raddrückelements (21) bestimmt werden.

13. Radpositionierungssystem (100) nach Anspruch 12, wobei die erste voreingestellte Drehmomentschwelle 40 % bis 55 % des Nenndrehmoments ist und wobei die zweite voreingestellte Drehmomentschwelle 20 % bis 40 % des Nenndrehmoments ist.

14. Radpositionierungssystem (100) nach einem der Ansprüche 10 bis 13, wobei das Erhaltemodul (110) ferner ausgelegt ist zum Erhalten einer Bewegungsstrecke und eines dritten Echtzeitdrehmoments jedes Raddrückelements (21) während des Positionierens;
wobei das Bestimmungsmodul (120) ferner ausgelegt ist zum Bestimmen, basierend auf der Bewegungsstrecke und dem dritten Echtzeitdrehmoment, ob es ein Raddrückelement (21) gibt, das ein Freilaufdrehmoment aufweist; und
wobei das Steuermodul (130) ferner ausgelegt ist zum: wenn es ein Raddrückelement (21) gibt, das ein Freilaufdrehmoment aufweist, Steuern des Raddrückelements (21), das ein Freilaufdrehmoment aufweist, sich nicht mehr zu bewegen.

15. Radpositionierungssystem (100) nach Anspruch 14, wobei das Bestimmungsmodul basierend auf der Bewegungsstrecke und dem dritten Echtzeitdrehmoment in der folgenden Weise bestimmt, ob es ein Raddrückelement (21) gibt, das ein Freilaufdrehmoment aufweist:
Vergleichen der Bewegungsstrecke mit einer voreingestellten Streckenschwelle;
wenn die Bewegungsstrecke kleiner als oder gleich der voreingestellten Streckenschwelle ist, Vergleichen des dritten Echtzeitdrehmoments mit einer dritten voreingestellten Drehmomentschwelle; und
wenn das dritte Echtzeitdrehmoment größer als die dritte voreingestellte Drehmomentschwelle ist, Bestimmen, dass es ein Raddrückelement (21) gibt, das ein Freilaufdrehmoment aufweist; oder
wenn die Bewegungsstrecke größer als die voreingestellte Streckenschwelle ist, Vergleichen des dritten Echtzeitdrehmoments mit einer vierten voreingestellten Drehmomentschwelle; und
wenn das dritte Echtzeitdrehmoment größer als die vierte voreingestellte Drehmomentschwelle ist, Bestimmen, dass es ein Raddrückelement (21) gibt, das ein Freilaufdrehmoment aufweist,
wobei die dritte voreingestellte Drehmomentschwelle größer als die vierte voreingestellte Drehmomentschwelle ist.

## Revendications

1. Procédé de positionnement de roue, appliqué à une station de charge et de permutation de batterie (12), la station de charge et de permutation de batterie (12) comprenant une plateforme de permutation de batterie et un mécanisme de centrage, et le mécanisme de centrage comprenant quatre éléments de poussée de roue (21), le procédé de positionnement de roue comprenant :
le fait de commander tous les éléments de poussée de roue (21) pour qu'ils se déplacent dans une direction latérale d'un véhicule à partir de leurs positions initiales respectives et d'obtenir un premier couple en temps réel de chaque élément de poussée de roue (21) ;
la comparaison de chaque premier couple en temps réel avec un premier seuil de couple prédéfini ;
**caractérisé par** :
lorsque chaque premier couple en temps réel atteint le premier seuil de couple prédéfini, le fait de commander tous les organes de poussée de roue (21) afin qu'ils reviennent à leurs positions initiales respectives ;
le fait de commander tous les éléments de poussée de roue (21) pour qu'ils se déplacent dans la direction latérale du véhicule à nouveau à partir de leurs positions initiales respectives et d'obtenir un deuxième couple en temps réel de chaque élément de poussée de roue (21) ;
la comparaison de chaque deuxième couple en temps réel avec un deuxième seuil de couple prédéfini ; et
lorsque chaque deuxième couple en temps réel atteint le deuxième seuil de couple prédéfini, le fait de commander tous les éléments de poussée de roue (21) pour qu'ils arrêtent de se déplacer,
le premier seuil de couple prédéfini étant supérieur au deuxième seuil de couple prédéfini.

2. Procédé de positionnement de roue selon la revendication 1, dans lequel avant l'étape consistant à commander tous les éléments de poussée de roue (21) pour qu'ils reviennent à leurs positions initiales respectives, le procédé de positionnement de roue comprend en outre :
lorsque des premiers couples en temps réel de deux éléments de poussée de roue (21) correspondant à des roues avant atteignent chacun le premier seuil de couple prédéfini, le fait de commander les deux éléments de poussée de roue (21) correspondant aux roues avant pour qu'ils arrêtent de se déplacer ; et
lorsque des premiers couples en temps réel de deux éléments de poussée de roue (21) correspondant à des roues arrière atteignent chacun le premier seuil de couple prédéfini, le fait de commander les deux éléments de poussée de roue (21) correspondant aux roues arrière pour qu'ils arrêtent de se déplacer.

3. Procédé de positionnement de roue selon la revendication 1 ou la revendication 2, dans lequel le premier seuil de couple prédéfini et le deuxième seuil de couple prédéfini sont déterminés sur la base d'un couple nominal de l'élément de poussée de roue (21).

4. Procédé de positionnement de roue selon la revendication 3, dans lequel le premier seuil de couple prédéfini est de 40 % à 55 % du couple nominal, et le deuxième seuil de couple prédéfini est de 20 % à 40 % du couple nominal.

5. Procédé de positionnement de roue selon l'une quelconque des revendications 1 à 4, dans lequel le procédé de positionnement de roue comprend en outre :
l'obtention d'une distance de déplacement et d'un troisième couple en temps réel de chaque élément de poussée de roue (21) lors du positionnement ;
la détermination, sur la base de la distance de déplacement et du troisième couple en temps réel, de s'il existe un élément de poussée de roue (21) ayant un couple libre ; et
**s'il existe un élément de poussée de roue** (21) ayant **un couple libre, le fait de commander** l'élément de **poussée de roue (21) ayant un couple libre** pour qu'il **arrête de se déplacer.**

6. **Procédé de positionnement de roue selon** la **revendication 5, dans lequel l'étape consistant** à déterminer, **sur la base de la distance de** déplacement et du **troisième couple en temps réel, s'il existe** un élément **de poussée de roue (21) ayant un couple** libre comprend :
la comparaison de la distance de déplacement avec un seuil de distance prédéfini ;
lorsque la distance de déplacement est inférieure ou égale au seuil de distance prédéfini, la comparaison du troisième couple en temps réel avec un troisième seuil de couple prédéfini ; et
lorsque le troisième couple en temps réel est supérieur au troisième seuil de couple prédéfini, la détermination qu'il existe un élément de poussée de roue (21) ayant un couple libre ; ou
lorsque la distance de déplacement est supérieure au seuil de distance prédéfini, la comparaison du troisième couple en temps réel avec un quatrième seuil de couple prédéfini ; et
lorsque le troisième couple en temps réel est supérieur au quatrième seuil de couple prédéfini, la détermination qu'il existe un élément de poussée de roue (21) ayant un couple libre,
le troisième seuil de couple prédéfini étant supérieur au quatrième seuil de couple prédéfini.

7. Procédé de positionnement de roue selon la revendication 5 ou la revendication 6, dans lequel le procédé de positionnement de roue comprend en outre :
le fait de donner une alarme de surcharge lors de ou après la commande de l'élément de poussée de roue (21) ayant un couple libre pour qu'il arrête de se déplacer.

8. Procédé de positionnement de roue selon la revendication 6 ou la revendication 7, dans lequel le seuil de distance prédéfini est déterminé sur la base d'une distance d'extension théorique de l'élément de poussée de roue (21) ; et/ou le troisième seuil de couple prédéfini et le quatrième seuil de couple prédéfini sont déterminés sur la base d'un couple nominal de l'élément de poussée de roue (21).

9. Procédé de positionnement de roue selon la revendication 8, dans lequel le seuil de distance prédéfini est de 93 % à 97 % de la distance d'extension théorique ; et/ou le troisième seuil de couple prédéfini est de 70 % à 80 % du couple nominal et le quatrième seuil de couple prédéfini est de 55 % à 65 % du couple nominal.

10. Système de positionnement de roue (100) appliqué à une station de charge et de permutation de batterie (12), la station de charge et de permutation de batterie (12) comprenant une plateforme de permutation de batterie et un mécanisme de centrage, et le mécanisme de centrage comprenant quatre éléments de poussée de roue (21), le système de positionnement de roue (100) comprenant :
un module d'obtention (110) configuré pour obtenir un premier couple en temps réel de chaque élément de poussée de roue (21) lorsque tous les éléments de poussée de roue (21) se déplacent dans une direction latérale d'un véhicule à partir de leurs positions initiales respectives, et obtenir un deuxième couple en temps réel de chaque élément de poussée de roue (21) lorsque tous les éléments de poussée de roue (21) sont commandés pour qu'ils se déplacent dans la direction latérale du véhicule à nouveau à partir de leurs positions initiales respectives ;
un module de détermination (120) configuré pour comparer chaque premier couple en temps réel avec un premier seuil de couple prédéfini, et comparer chaque deuxième couple en temps réel avec un deuxième seuil de couple prédéfini ; et
un module de commande (130) configuré pour commander tous les éléments de poussée de roue (21) pour qu'ils se déplacent dans la direction latérale du véhicule à partir de leurs positions initiales respectives ;
**caractérisé en ce que** le module de commande (130) est en outre configuré pour : lorsque chaque premier couple en temps réel atteint le premier seuil de couple prédéfini, commander tous les éléments de poussée de roue (21) pour qu'ils reviennent à leurs positions initiales respectives ; commander tous les éléments de poussée de roue (21) pour qu'ils se déplacent dans la direction latérale du véhicule à nouveau à partir de leurs positions initiales respectives ; et lorsque chaque deuxième couple en temps réel atteint le deuxième seuil de couple prédéfini, commander tous les éléments de poussée de roue (21) pour qu'ils arrêtent de se déplacer,
le premier seuil de couple prédéfini étant supérieur au deuxième seuil de couple prédéfini.

11. Système de positionnement de roue (100) selon la revendication 10, dans lequel le module de commande (130) est en outre configuré pour :
lorsque des premiers couples en temps réel de deux éléments de poussée de roue (21) correspondant à des roues avant atteignent chacun le premier seuil de couple prédéfini, commander les deux éléments de poussée de roue (21) correspondant aux roues avant pour qu'ils arrêtent de se déplacer ; et
lorsque des premiers couples en temps réel de deux éléments de poussée de roue (21) correspondant à des roues arrière atteignent chacun le premier seuil de couple prédéfini, commander les deux éléments de poussée de roue (21) correspondant aux roues arrière pour qu'ils arrêtent de se déplacer.

12. Système de positionnement de roue (100) selon la revendication 10 ou la revendication 11, dans lequel le premier seuil de couple prédéfini et le deuxième seuil de couple prédéfini sont déterminés sur la base d'un couple nominal de l'élément de poussée de roue (21).

13. Système de positionnement de roue (100) selon la revendication 12, dans lequel le premier seuil de couple prédéfini est de 40 % à 55 % du couple nominal, et le deuxième seuil de couple prédéfini est de 20 % à 40 % du couple nominal.

14. Système de positionnement de roue (100) selon l'une quelconque des revendications 10 à 13, dans lequel le module d'obtention (110) est en outre configuré pour obtenir une distance de déplacement et un troisième couple en temps réel de chaque élément de poussée de roue (21) pendant le positionnement ;
le module de détermination (120) est en outre configuré pour déterminer, sur la base de la distance de déplacement et du troisième couple en temps réel, s'il existe un élément de poussée de roue (21) ayant un couple libre ; et
le module de commande (130) est en outre configuré pour : s'il existe un élément de poussée de roue (21) ayant un couple libre, commander l'élément de poussée de roue (21) ayant un couple libre pour qu'il arrête de se déplacer.

15. Système de positionnement de roue (100) selon la revendication 14, dans lequel le module de détermination détermine, sur la base de la distance de déplacement et du troisième couple en temps réel, s'il existe un élément de poussée de roue (21) ayant un couple libre, selon les manières suivantes :
la comparaison de la distance de déplacement avec un seuil de distance prédéfini ;
lorsque la distance de déplacement est inférieure ou égale au seuil de distance prédéfini, la comparaison du troisième couple en temps réel à un troisième seuil de couple prédéfini ; et
lorsque le troisième couple en temps réel est supérieur au troisième seuil de couple prédéfini, la détermination qu'il y a un élément de poussée de roue (21) ayant un couple libre ; ou
lorsque la distance de déplacement est supérieure au seuil de distance prédéfini, la comparaison du troisième couple en temps réel à un quatrième seuil de couple prédéfini ; et
lorsque le troisième couple en temps réel est supérieur au quatrième seuil de couple prédéfini, la détermination qu'il y a un élément de poussée de roue (21) ayant un couple libre,
le troisième seuil de couple prédéfini étant supérieur au quatrième seuil de couple prédéfini.
